# FASCICULE DE BREVET EUROPEEN

(11) **EP 3 115 623 B1**
(45) Date de publication et mention de la délivrance du brevet: **18.04.2018**
(21) Numéro de dépôt: 15175585.7
(22) Date de dépôt: 07.07.2015
(51) Int. Cl.: F16B 5/06, F16B 3/00

(54) **DISPOSITIF D'ASSEMBLAGE ET DE VERROUILLAGE**
VORRICHTUNG ZUM ZUSAMMENBAU UND ZUR VERRIEGELUNG
DEVICE FOR ASSEMBLING AND LOCKING

(43) Date de publication de la demande: 11.01.2017
(73) Titulaire: Pellet ASC, 69970 Chaponnays (FR)
(72) Inventeur: Godonnier, Philippe, 42580 L'Etrat (FR); Grandjean, Philippe, 42100 Saint Etienne (FR)
(74) Mandataire: Godard, Xavier

(56) Documents cités:
- FR-A1- 2 733 551
- US-A- 3 462 181
- US-A- 5 984 566

## Description

La présente invention est relative à un dispositif d'assemblage et de verrouillage permettant le maintien et la fixation de deux profils assurant par exemple et de manière non limitative l'agencement et le montage d'articles sanitaires. En particulier, la présente invention est relative à un dispositif d'assemblage et de verrouillage suivant le préambule de la revendication 1. Un tel dispositif est connu du document US 5 984 566 A. On connait des dispositifs de fixation permettant par exemple la retenue d'accessoires sanitaires comprenant généralement une platine de fixation immobilisée sur le mur par des vis et des moyens de liaison de type manchon et vis de serrage ou par des systèmes d'emboitement par clipsage.

L'objet du dispositif d'assemblage et de verrouillage suivant la présente invention est d'assurer le maintien de deux supports permettant une liaison entre le lieu de fixation et le produit à fixer tout en permettant de changer le produit fixé sans modifier ledit dispositif d'assemblage et de verrouillage.

Le dispositif d'assemblage et de verrouillage suivant la présente invention comprend deux supports présentant respectivement des zones de liaison de profils complémentaires et des moyens de verrouillage coopérant avec l'une au moins des zones de liaison afin d'assurer la fixation desdits supports entre eux.

Le dispositif d'assemblage et de verrouillage suivant la présente invention comprend des premiers et seconds supports qui proviennent d'un même profilé afin de présenter les mêmes zones de liaison.

Le dispositif d'assemblage et de verrouillage suivant la présente invention comporte pour chaque support et suivant une direction longitudinale d'une part un premier et second bord comprenant respectivement une première et une seconde zone de liaison et d'autre part entre le premier et second bord une troisième zone de liaison.

Le dispositif d'assemblage et de verrouillage suivant la présente invention comporte des supports dont les premières et secondes zones de liaison des premiers et seconds bords présentent un profil qui est symétriquement complémentaire lors du pivotement de l'un au moins desdits supports afin de permettre l'assemblage desdits supports entre eux.

Le dispositif d'assemblage et de verrouillage suivant la présente invention comporte des supports dont la troisième zone de liaison présente un profil qui est symétriquement complémentaire lors du pivotement de l'un au moins des supports afin d'assurer d'une part l'assemblage desdits support entre eux et d'autre part la mise en place des moyens de fixation pour le verrouillage desdits supports l'un contre l'autre. De préférence, le dispositif d'assemblage et de verrouillage suivant la présente invention comporte des supports dont la première, seconde et troisième zone de liaison sont disposées dans des plans longitudinaux distincts et parallèles entre eux. De préférence, le dispositif d'assemblage et de verrouillage suivant la présente invention comporte un premier et second support comprenant respectivement au moins deux faces externes disposées dans des plans perpendiculaires. De préférence, le dispositif d'assemblage et de verrouillage suivant la présente invention comporte des supports dont la première zone de liaison aménagée sur le premier bord est constituée d'une rainure ouverte vers l'extérieur dudit support. De préférence, la rainure de chaque support constituant le dispositif d'assemblage et de verrouillage suivant la présente invention est bordée latéralement par deux nervures de forme et de dimensions différentes. De préférence, le dispositif d'assemblage et de verrouillage suivant la présente invention comporte des supports dont la seconde zone de liaison aménagée sur le second bord est constituée d'une rainure ouverte vers l'intérieur desdits supports et bordée par une nervure. De préférence, la rainure et la nervure de chaque support du dispositif d'assemblage et de verrouillage suivant la présente invention comporte respectivement un profil qui est complémentaire à celui de la rainure et de la nervure de la première zone de liaison. De préférence, le dispositif d'assemblage et de verrouillage suivant la présente invention comprend des supports dont la troisième zone de liaison agencée entre les bords et sur la face interne de chaque support est constituée d'une rainure délimitée sur l'un de ses cotés par une nervure. De préférence, les profils de la rainure et de la nervure des supports du dispositif d'assemblage et de verrouillage suivant la présente invention sont prévus pour coopérer l'un avec l'autre lors de l'agencement desdits supports entre eux et après le pivotement de l'un de ces derniers de manière à délimiter un espace longitudinal permettant l'introduction des moyens de verrouillage assurant la fixation desdits supports entre eux. De préférence, le dispositif d'assemblage et de verrouillage suivant la présente invention comprend :
- un premier support comportant des zones de liaison et des moyens de fixation contre un appui fixe ;
- un second support comprenant des zones de liaison venant coopérer après pivotement de ce dernier avec les zones de liaison du premier support et des moyens d'immobilisation d'un appareillage à fixer contre l'appui fixe ;
- et des moyens de verrouillage coopérant avec l'une au moins des zones de liaison du premier et second support afin d'assurer la fixation desdits supports entre eux.

La description qui va suivre en regard des dessins annexés, donnés à titre d'exemples non limitatifs, permettra de mieux comprendre l'invention, les caractéristiques qu'elle présente et les avantages qu'elle est susceptible de procurer :
Figure 1 est une vue en perspective éclatée illustrant le dispositif d'assemblage et de verrouillage suivant la présente.
Figure 2 est une vue de coté représentant un support du dispositif d'assemblage et de verrouillage suivant la présente.
Figure 3 est une vue de coté montrant le profil des premiers et seconds supports avant assemblage du dispositif d'assemblage et de verrouillage suivant la présente.
Figure 4 est une vue en perspective illustrant les premiers et seconds supports en position assemblée du dispositif d'assemblage et de verrouillage suivant la présente.
Figure 5 est une vue de coté représentant les premiers et seconds supports en position assemblée permettant de recevoir les moyens de verrouillage du dispositif d'assemblage et de verrouillage suivant la présente.
Figure 6 est une vue montrant les premiers et seconds supports en position assemblée et verrouillée par les moyens de verrouillage du dispositif d'assemblage et de verrouillage suivant la présente.

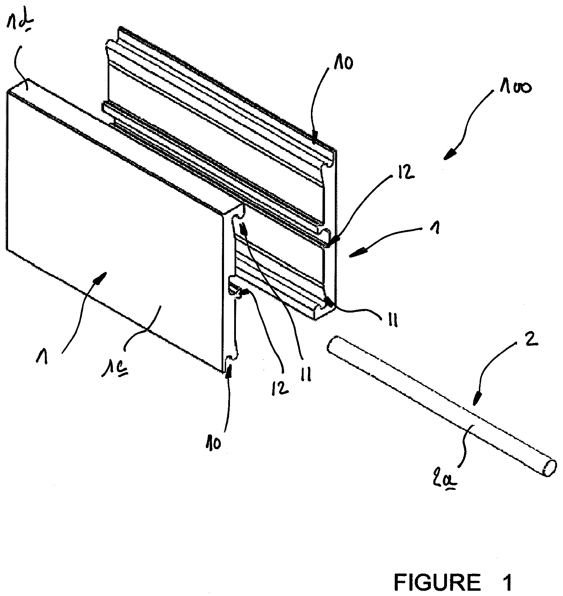

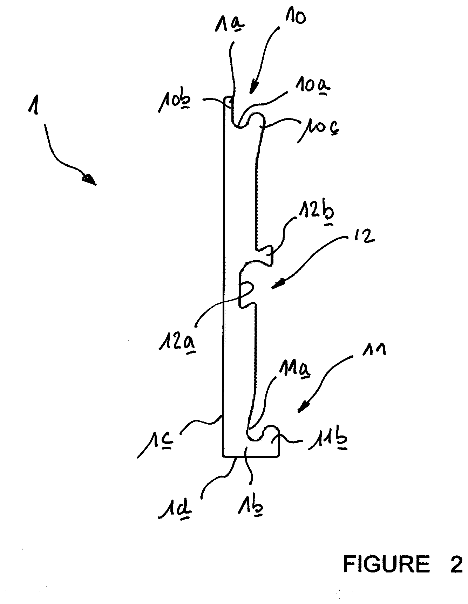

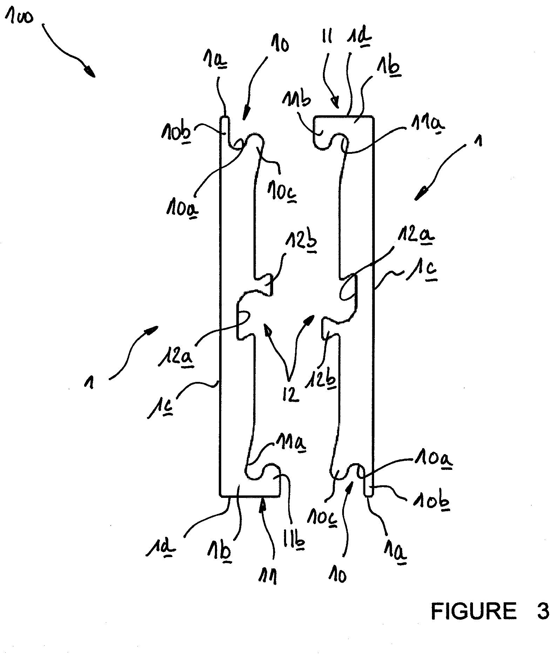

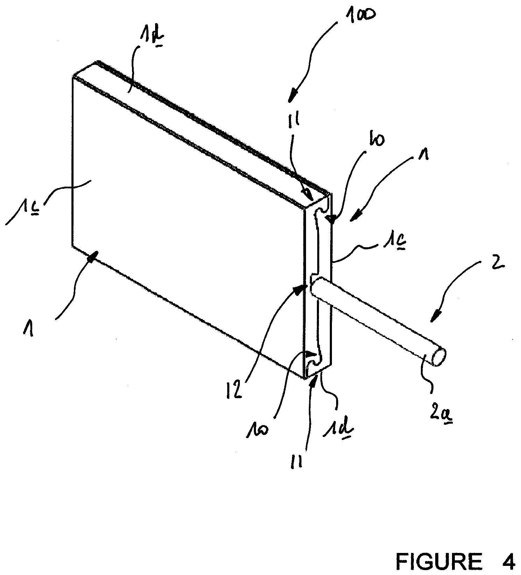

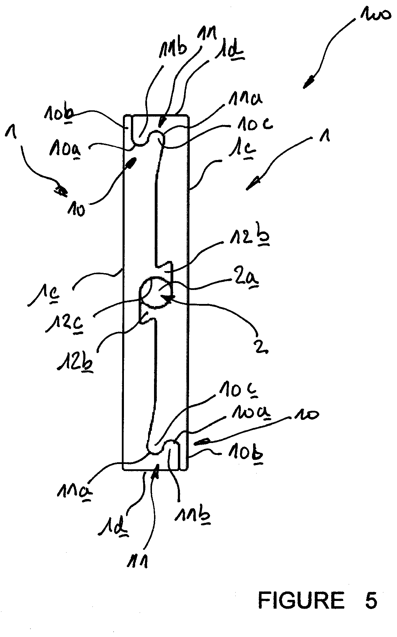

On a montré en figures 1 à 5 un dispositif d'assemblage et de verrouillage 100 comprenant deux supports 1 assemblés et fixés l'un à l'autre par l'intermédiaire de moyens de verrouillage 2.

Les deux supports 1 présentent respectivement des zones de liaison 10, 11, 12 de profils complémentaires dont l'une au moins coopère avec les moyens de verrouillage 2 afin d'assurer la fixation desdits supports entre eux.

Les premiers et seconds supports 1 proviennent d'un même profilé afin de présenter les mêmes zones de liaison 10, 11, 12. La première, seconde et troisième zone de liaison 10, 11, 12 de chaque support 1 sont disposées dans des plans longitudinaux distincts et parallèles entre eux.

Chaque support 1 comporte suivant une direction longitudinale d'une part un premier et second bord 1**a**, 1**b** comprenant respectivement une première et une seconde zone de liaison 10, 11 et d'autre part entre le premier et second bord 1**a**, 1**b** une troisième zone de liaison 12.

Les premières et secondes zones de liaison 10, 11 des premiers et seconds bords 1**a**, 1**b** de chaque support 1 présentent chacune un profil qui est symétriquement complémentaire permettant, lors du pivotement de l'un au moins des supports 1, l'assemblage desdits supports 1 entre eux.

Les premiers et seconds supports 1 comportent respectivement au moins deux faces externes 1**c**, 1**d** disposées dans des plans perpendiculaires et délimitant les zones de liaison 10 et 11.

La première zone de liaison 10 aménagée sur le premier bord 1**a** de chaque support 1 est constituée d'une rainure 10**a** ouverte vers l'extérieur dudit support 1.

La rainure 10**a** est bordée latéralement par deux nervures 10**b**, 10**c** de forme et de dimensions différentes.

La seconde zone de liaison 11 aménagée sur le second bord 1**b** de chaque support 1 est constituée d'une rainure 11**a** ouverte vers l'intérieur dudit support et bordée par une nervure 11**b**.

La rainure 11**a** et la nervure 11**b** présentent respectivement un profil qui est complémentaire à celui de la rainure 10**a** et de la nervure 10**b** de la première zone de liaison 10. La congruence des profils de chaque rainure et de chaque nervure assure aux zones de liaison 10 et 11 un parfait emboitement.

La troisième zone de liaison 12 de chaque support 1 présente un profil qui est symétriquement complémentaire lors du pivotement de l'un au moins desdits supports.

La troisième zone de liaison 12 agencée entre les bords 1**a** et 1**b** et sur la face interne de chaque support 1 est constituée d'une rainure 12**a** délimitée sur l'un de ses cotés par une nervure 12**b**.

Les profils de la rainure 12**a** et de la nervure 12**b** sont prévus pour coopérer l'un avec l'autre lors de l'agencement des supports 1 entre eux et après le pivotement de l'un de ces derniers.

Lorsque les nervures 12**b** sont disposées à l'intérieur des rainures 12**a** de chaque support 1 on note que ces dernières délimitent un espace longitudinale 12**c** permettant l'introduction des moyens de verrouillage 2.

Les moyens de verrouillage 2 sont constitués par exemple d'un axe cylindrique 2**a** qui est introduit à l'intérieur de l'espace 12**c** formé par la réunion des troisièmes zones de liaison 12 de chaque support 1 afin de fixer et d'immobiliser lesdits supports 1 entre eux.

On comprend de la description qui précède que le dispositif d'assemblage et de verrouillage 100 peut être utilisé pour permettre le montage et la fixation de deux éléments entre eux.

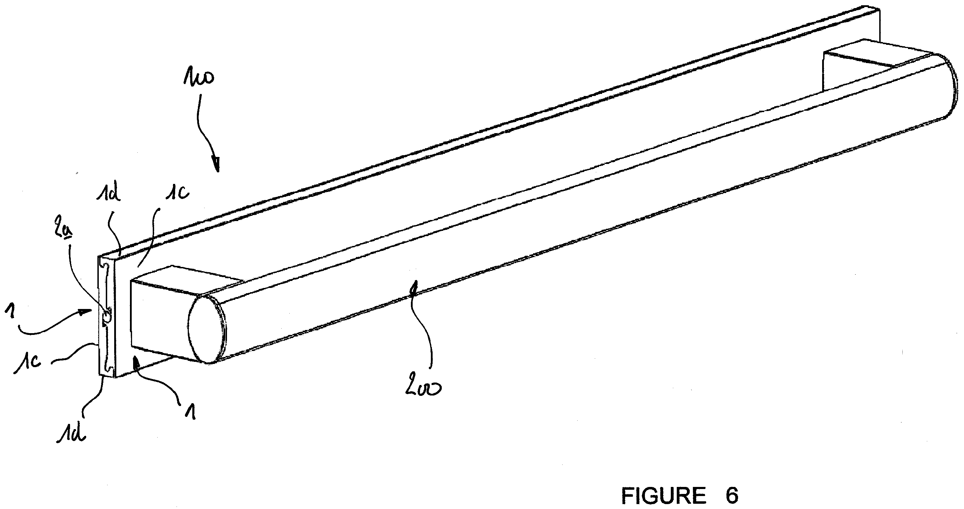

Selon un mode de réalisation non limitatif, il est représenté en figure 6 le dispositif d'assemblage et de verrouillage 100 pour la fixation par exemple contre un mur d'un appareillage sanitaire 200.

A cet effet le premier support 1 est fixé contre un mur au moyen, par exemple, de vis non représentées, traversant ledit support et qui sont positionnées sur toute sa longueur à espace régulier et au niveau des chemins prévus entre les zones de liaison 10, 11, 12.

Le second support 1 comporte des moyens de fixation, non représentés, permettant la mise en place et l'immobilisation sur sa face externe 1**c** de l'appareillage sanitaire 200.

Le premier support 1 est fixé contre le mur de manière que sa face externe 1**c** soit en appui contre ce dernier et que son premier bord 1**a** soit positionné vers le haut.

Le second support 1 solidaire de l'appareillage sanitaire 200 est présenté en face du premier support 1 de manière que son premier bord 1**a** soit dirigé vers le bas afin de positionner :
- D'une première part sa nervure 10**c** de sa première zone de liaison 10 dans la rainure 11**a** du second bord 1**b** du premier support,
- D'une seconde part sa nervure 11**b** de sa seconde zone de liaison 11 à l'intérieur de la rainure 10**a** du premier bord 1**a** dudit premier support,
- Et d'une troisième part sa nervure 12**b** de sa troisième zone de liaison 12 dans la rainure 12**a** du premier support.

Lorsque le second support 1 est accroché sur le premier support 1 solidaire du mur et que les trois zones de liaison 10, 11, 12 de chaque support coopèrent les une avec les autres, des axes de verrouillage 2**a** sont introduits, à chaque extrémité du dispositif d'assemblage et de verrouillage 100 et à l'intérieur de l'espace 12**c** formé par la réunion des troisièmes zones de liaison 12 de chaque support 1 afin de fixer et d'immobiliser le second support 1 solidaire de l'appareillage sanitaire 200 sur le premier support 1 (figure 6).

Les axes 2**a** des moyens de verrouillage 2 peuvent comporter des empreintes d'accrochage permettant leur retrait à l'aide d'un outil spécifique afin de désolidariser le second support 1 du premier soit en cas de détérioration de l'appareillage sanitaire soit dans le cas de la mise en place d'un autre appareillage.

En effet, le dispositif d'assemblage et de verrouillage 100 suivant la présente invention permet d'agencer et de fixer par exemple d'autres appareillages sanitaires sans à avoir à changer le support 1 solidaire du mur.

Il doit d'ailleurs être entendu que la description qui précède n'a été donnée qu'à titre d'exemple, et quelle ne limite nullement le domaine de l'invention dont on ne sortirait pas en remplaçant les détails d'exécution décrits par tout autre équivalent.

## Revendications

1. Dispositif d'assemblage et de verrouillage pour appareillage sanitaire comprenant deux supports (1) présentant respectivement des zones de liaison (10, 11, 12) de profils complémentaires et des moyens de verrouillage (2) coopérant avec l'une au moins des zones de liaison (10, 11, 12) afin d'assurer la fixation desdits supports entre eux, lesdits premiers et seconds supports (1) provenant d'un même profilé afin de présenter les mêmes zones de liaison (10, 11, 12), **caractérisé en ce que** lesdits supports (1) comportent respectivement suivant une direction longitudinale d'une part un premier et second bord (1**a**, 1**b**) comprenant respectivement une première et une seconde zone de liaison (10, 11) et d'autre part entre le premier et second bord (1**a**, 1**b**) une troisième zone de liaison (12), lesdites premières et secondes zones de liaison (10, 11) des premiers et seconds bords (1**a**, 1**b**) de chaque support (1) présentant chacune un profil qui est symétriquement complémentaire lors du pivotement de l'un au moins des supports afin de permettre l'assemblage desdits support (1) entre eux, ladite troisième zone de liaison (12) de chaque support (1) présentant un profil qui est symétriquement complémentaire lors du pivotement de l'un au moins des supports afin d'assurer d'une part l'assemblage desdits support (1) entre eux et d'autre part la mise en place des moyens de fixation (2) pour le verrouillage desdits support (1) l'un contre l'autre.

2. Dispositif d'assemblage et de verrouillage suivant la revendication 1, **caractérisé en ce que** la première, seconde et troisième zone de liaison (10, 11, 12) de chaque support (1) sont disposées dans des plans longitudinaux distincts et parallèles entre eux.

3. Dispositif d'assemblage et de verrouillage suivant la revendication 1, **caractérisé en ce que** les premiers et seconds supports (1) comportent respectivement au moins deux faces externes (1**c**, 1**d**) disposées dans des plans perpendiculaires.

4. Dispositif d'assemblage et de verrouillage suivant la revendications 1, **caractérisé en ce que** la première zone de liaison (10) aménagée sur le premier bord (1**a**) de chaque support (1) est constituée d'une rainure (10**a**) ouverte vers l'extérieur dudit support (1).

5. Dispositif d'assemblage et de verrouillage suivant la revendication 4, **caractérisé en ce que** la rainure (10a) est bordée latéralement par deux nervures (10**b**, 10**c**) de forme et de dimensions différentes.

6. Dispositif d'assemblage et de verrouillage suivant la revendication 1, **caractérisé en ce que** la seconde zone de liaison (11) aménagée sur le second bord (1**b**) de chaque support (1) est constituée d'une rainure (11**a**) ouverte vers l'intérieur dudit support et bordée par une nervure (11**b**).

7. Dispositif d'assemblage et de verrouillage suivant les revendications 4 à 6, **caractérisé en ce que** chaque support (1) comporte une rainure (11**a**) et une nervure (11**b**) qui présentent respectivement un profil qui est complémentaire à celui de la rainure (10**a**) et de la nervure (10**b**) de la première zone de liaison (10).

8. Dispositif d'assemblage et de verrouillage suivant la revendication 1, **caractérisé en ce que** la troisième zone de liaison (12) agencée entre les bords (1**a** et 1**b**) et sur la face interne de chaque support (1) est constituée d'une rainure (12**a**) délimitée sur l'un de ses cotés par une nervure (12**b**).

9. Dispositif d'assemblage et de verrouillage suivant la revendication 8, **caractérisé en ce que** les profils de la rainure (12**a**) et de la nervure (12**b**) sont prévus pour coopérer l'un avec l'autre lors de l'agencement des supports (1) entre eux et après le pivotement de l'un de ces derniers de manière à délimiter un espace longitudinal (12**c**) permettant l'introduction des moyens de verrouillage (2) assurant la fixation desdits support (1) entre eux.

10. Dispositif d'assemblage et de verrouillage suivant les revendications 1 à 9, **caractérisé en ce qu'**il comprend
• un premier support (1) comportant des zones de liaison (10, 11, 12) et des moyens de fixation contre un appui fixe ;
• un second support (1) comprenant des zones de liaison (10, 11, 12) venant coopérer après pivotement de ce dernier avec les zones de liaison du premier support et des moyens d'immobilisation d'un appareillage à fixer contre l'appui fixe ;
• et des moyens de verrouillage (2) coopérant avec l'une au moins des zones de liaison (10, 11, 12) du premier et second support (1) afin d'assurer la fixation desdits supports entre eux.

## Patentansprüche

1. Vorrichtung zum Zusammenbau und zur Verriegelung für eine sanitäre Anlage, umfassend zwei Träger (1), die jeweils Verbindungszonen (10, 11, 12) von Zusatzprofilen und Verriegelungsmittel (2), die mit mindestens einer der Verbindungszonen (10, 11, 12) zusammenwirken, um die Befestigung der Träger miteinander sicherzustellen, aufweisen, wobei der erste und der zweite Träger (1) von einem selben Profil kommen, um dieselben Verbindungszonen (10, 11, 12) aufzuweisen, **dadurch gekennzeichnet, dass** die Träger (1) jeweils entlang einer Längsrichtung einerseits einen ersten und zweiten Rand (1a, 1b), jeweils umfassend eine erste und eine zweite Verbindungszone (10, 11), und andererseits zwischen dem ersten und dem zweiten Rand (1a, 1b) eine dritte Verbindungszone (12) aufweisen, wobei die erste und die zweite Verbindungszone (10, 11) des ersten und des zweiten Rands (1a, 1b) jedes Trägers (1) jeweils ein Profil aufweisen, das beim Schwenken mindestens eines der Träger symmetrisch komplementär ist, um den Zusammenbau der Träger (1) miteinander zu gestatten, wobei die dritte Verbindungszone (12) jedes Trägers (1) ein Profil aufweist, das beim Schwenken mindestens eines der Träger symmetrisch komplementär ist, um einerseits den Zusammenbau der Träger (1) miteinander und andererseits die Anbringung der Befestigungsmittel (2) zur Verriegelung der Träger (1) gegeneinander sicherzustellen.

2. Vorrichtung zum Zusammenbau und zur Verriegelung nach Anspruch 1, **dadurch gekennzeichnet, dass** die erste, die zweite und die dritte Verbindungszone (10, 11, 12) jedes Trägers (1) in Längsebenen angeordnet sind, die getrennt und parallel zueinander sind.

3. Vorrichtung zum Zusammenbau und zur Verriegelung nach Anspruch 1, **dadurch gekennzeichnet, dass** der erste und der zweite Träger (1) jeweils mindestens zwei Außenseiten (1c, 1d) aufweisen, die in senkrechten Ebenen angeordnet sind.

4. Vorrichtung zum Zusammenbau und zur Verriegelung nach Anspruch 1, **dadurch gekennzeichnet, dass** die erste Verbindungszone (10), die auf dem ersten Rand (1a) jedes Trägers (1) angeordnet ist, von einer Nut (10a) gebildet ist, die zum Äußeren des Trägers (1) hin offen ist.

5. Vorrichtung zum Zusammenbau und zur Verriegelung nach Anspruch 4, **dadurch gekennzeichnet, dass** die Nut (10a) seitlich von zwei Rippen (10b, 10c) unterschiedlicher Form und Abmessungen eingefasst ist.

6. Vorrichtung zum Zusammenbau und zur Verriegelung nach Anspruch 1, **dadurch gekennzeichnet, dass** die zweite Verbindungszone (11), die auf dem zweiten Rand (1b) jedes Trägers (1) angeordnet ist, von einer Nut (11a) gebildet ist, die zum Inneren des Trägers hin offen und von einer Rippe (11b) eingefasst ist.

7. Vorrichtung zum Zusammenbau und zur Verriegelung nach einem der Ansprüche 4 bis 6, **dadurch gekennzeichnet, dass** jeder Träger (1) eine Nut (11a) und eine Rippe (11b) aufweist, die jeweils ein Profil aufweisen, das zu dem der Nut (10a) und der Rippe (10b) der ersten Verbindungszone (10) komplementär ist.

8. Vorrichtung zum Zusammenbau und zur Verriegelung nach Anspruch 1, **dadurch gekennzeichnet, dass** die dritte Verbindungszone (12), die zwischen den Rändern (1a und 1b) und auf der Innenseite jedes Trägers (1) angeordnet ist, von einer Nut (12a) gebildet ist, die auf einer ihrer Seiten von einer Rippe (12b) begrenzt ist.

9. Vorrichtung zum Zusammenbau und zur Verriegelung nach Anspruch 8, **dadurch gekennzeichnet, dass** die Profile der Rippe (12a) und der Rippe (12b) vorgesehen sind, bei der Anordnung der Träger (1) zueinander und nach dem Schwenken eines davon miteinander zusammenzuwirken, um einen Längsraum (12c) zu begrenzen, wobei die Einführung der Verriegelungsmittel (2) gestattet wird, die die Befestigung der Träger (1) miteinander sicherstellt.

10. Vorrichtung zum Zusammenbau und zur Verriegelung nach Anspruch 1 bis 9, **dadurch gekennzeichnet, dass** sie Folgendes umfasst:
• einen ersten Träger (1), der Verbindungszonen (10, 11, 12) und Mittel zur Befestigung gegen eine feste Auflage aufweist;
• einen zweiten Träger (1), der Verbindungszonen (10, 11, 12), die nach dem Schwenken desselben mit den Verbindungszonen des ersten Trägers zusammenwirken, und Mittel zum Festsetzen einer Anlage, die an der festen Auflage befestigt werden soll, aufweist;
• und Verriegelungsmittel (2), die mit mindestens einer der Verbindungszonen (10, 11, 12) des ersten und des zweiten Trägers (1) zusammenwirken, um die Befestigung der Träger miteinander sicherzustellen.

## Claims

1. Assembling and locking device for a sanitary fixture, comprising two brackets (1) that each have connecting zones (10, 11, 12) for complementary profiles and locking means (2) that engage with at least one of the connecting zones (10, 11, 12) in order to secure said brackets together, said first and second brackets (1) being produced from one and the same profiled section so as to have the same connecting zones (10, 11, 12), **characterized in that** said brackets (1) each have, in a longitudinal direction, a first and a second edge (1a, 1b) comprising a first and a second connecting zone (10, 11), respectively, and also, between the first and second edges (1a, 1b), a third connecting zone (12), said first and second connecting zones (10, 11) of the first and second edges (1a, 1b) of each bracket (1) each having a profile which is symmetrically complementary when at least one of the brackets pivots, in order to allow said brackets (1) to be assembled together, said third connecting zone (12) of each bracket (1) having a profile which is symmetrically complementary when at least one of the brackets pivots, in order to enable said brackets (1) to be assembled together and also to enable fastening means (2) for locking said brackets (1) together to be fitted.

2. Assembling and locking device according to Claim 1, **characterized in that** the first, second and third connecting zones (10, 11, 12) of each bracket (1) are disposed in different and mutually parallel longitudinal planes.

3. Assembling and locking device according to Claim 1, **characterized in that** the first and second brackets (1) each have at least two external faces (1c, 1d) disposed in perpendicular planes.

4. Assembling and locking device according to Claim 1, **characterized in that** the first connecting zone (10) formed on the first edge (1a) of each bracket (1) is made up of a groove (10a) that is open towards the outside of said bracket (1).

5. Assembling and locking device according to Claim 4, **characterized in that** the groove (10a) is bordered laterally by two ribs (10b, 10c) with different shapes and dimensions.

6. Assembling and locking device according to Claim 1, **characterized in that** the second connecting zone (11) formed on the second edge (1b) of each bracket (1) is made up of a groove (11a) that is open towards the inside of said bracket and bordered by a rib (11b).

7. Assembling and locking device according to Claims 4 to 6, **characterized in that** each bracket (1) has a groove (11a) and a rib (11b) which have respective profiles that are complementary to those of the groove (10a) and of the rib (10b) of the first connecting zone (10).

8. Assembling and locking device according to Claim 1, **characterized in that** the third connecting zone (12) arranged between the edges (1a and 1b) and on the internal face of each bracket (1) is made up of a groove (12a) delimited on one of its sides by a rib (12b).

9. Assembling and locking device according to Claim 8, **characterized in that** the profiles of the groove (12a) and of the rib (12b) are provided to engage with one another when the brackets (1) are arranged together and after one of the latter has been pivoted so as to delimit a longitudinal space (12c) allowing the introduction of locking means (2) for fastening said brackets (1) together.

10. Assembling and locking device according to Claims 1 to 9, **characterized in that** it comprises
- a first bracket (1) having connecting zones (10, 11, 12) and means for fastening to a fixed support;
- a second bracket (1) comprising connecting zones (10, 11, 12) that engage, after the latter has been pivoted, with the connecting zones of the first support and means for immobilizing a fixture to be fastened to the fixed support;
- and locking means (2) that engage with at least one of the connecting zones (10, 11, 12) of the first and second brackets (1) in order to fasten said brackets together.
